(19) Europäisches Patentamt
European Patent Office
Office européen des brevets

(11) EP 4 258 391 A1

(12) **EUROPEAN PATENT APPLICATION**
published in accordance with Art. 153(4) EPC

(43) Date of publication:
**11.10.2023 Bulletin 2023/41**

(21) Application number: **21900447.0**

(22) Date of filing: **22.11.2021**

(51) International Patent Classification (IPC):
***H01M 4/80*** *(2006.01)* ***H01M 4/66*** *(2006.01)*

(52) Cooperative Patent Classification (CPC):
**H01M 4/66; H01M 4/80;** Y02E 60/10

(86) International application number:
**PCT/JP2021/042798**

(87) International publication number:
**WO 2022/118692 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.12.2020 JP 2020199271**

(71) Applicant: **Kuraray Kuraflex Co., Ltd.**
**Okayama 702-8045 (JP)**

(72) Inventors:
- **SHIROTANI, Yasuhiro**
  **Okayama-shi, OKAYAMA 702-8601 (JP)**
- **OBATA, Soichi**
  **Osaka-shi, Osaka 530-8611 (JP)**
- **OKAMOTO, Tetsuya**
  **Kurashiki-shi, OKAYAMA 713-8550 (JP)**
- **IWASAKI, Hideharu**
  **Osaka-shi, Osaka 530-8611 (JP)**

(74) Representative: **Müller-Boré & Partner**
**Patentanwälte PartG mbB**
**Friedenheimer Brücke 21**
**80639 München (DE)**

# (54) CURRENT COLLECTOR, ELECTRODE, AND NON-AQUEOUS ELECTROLYTE BATTERY

(57) A current collector, an electrode, and a non-aqueous electrolyte battery are provided. The current collector includes a conductive body having a three-dimensional porous structure. The current collector has an air permeability of 0.1 to 600 cc/cm$^2$/sec and a thickness of less than 100 μm. Also, the electrode includes the current collector and an electrode material layer disposed on at least one surface of the current collector. The non-aqueous electrolyte battery includes the electrode.

EP 4 258 391 A1

## Description

CROSS REFERENCE TO THE RELATED APPLICATION

This application is based on and claims Convention priority to Japanese patent application No. 2020-199271, filed December 1, 2020 in Japan, the entire disclosure of which is herein incorporated by reference as a part of this application.

BACKGROUND OF THE INVENTION

The present invention relates to a current collector and an electrode for use in a non-aqueous electrolyte battery, as well as such a non-aqueous electrolyte battery.

Non-aqueous electrolyte batteries can be used without being constrained by the decomposition voltage for water and comprise non-aqueous electrolytes containing organic solvents. Demand for non-aqueous electrolyte batteries has been rapidly expanding due to their characteristics as, for example, lithium-ion secondary batteries which are compact and lightweight, have significant energy densities and can be repeatedly used by recharging and discharging. Such lithium-ion secondary batteries with their relatively high energy densities are applicable in fields of mobile phones, laptop personal computers, electric automotive vehicles, and others. With expansive applications and developments, further improvements for these non-aqueous electrolyte batteries are demanded in terms of lower resistance, higher capacity, enhanced mechanical properties and productivity, increased safety, and so on.

A non-aqueous electrolyte battery principally comprises a positive electrode, a negative electrode, an electrolyte, and a separator. Fueled by the above-mentioned demands for improved non-aqueous electrolyte batteries, ongoing improvements are underway for each of these components.

Among them are a positive electrode and a negative electrode (which will hereinafter be referred to as an "electrode" in a collective sense) each of which principally comprises an active medium (or an active material), a conductive agent, a binder, and a current collector. For each of these components, improvements to address the above-mentioned demands are being tried.

As an example of an improved current collector, Patent Document 1 discloses an electrode comprising a current collector formed of a foam-shaped or fiber-shaped metal-sintered material having a three-dimensional structure, and a film that is formed thereon through deposition of a negative electrode material containing an element capable of forming an alloy with lithium. By using the electrode in which the negative electrode material is constrained to the current collector, internal resistance increase in the negative electrode is mitigated due to retained contact between the negative electrode material and the current collector even with repeated expansion and contraction of the negative electrode material, and initial capacity of the battery can be maintained without the disintegration of a conductive network.

Patent Document 2 discloses that by using a plated, spun-bond nonwoven fabric as a current collector, a battery with a low internal resistance is obtained owing to the continuity of the resulting fibers.

Patent Document 3 discloses that where a battery comprising an electrode provided with an active material layer which is carried on a sheet-like current collector made of a metal fiber nonwoven fabric is produced, a significantly enhanced ionic conduction is achieved because the facilitated penetration of an electrolyte solution into through holes allows the electrolyte solution to be immersed into the electrode from inner wall surfaces of the through holes.

RELATED DOCUMENT

PATENT DOCUMENT

[Patent Document 1] JP Laid-open Patent Publication No. 2004-071305

[Patent Document 2] JP Laid-open Patent Publication No. 2003-282066

[Patent Document 3] JP Laid-open Patent Publication No. 2012-195182

SUMMARY OF THE INVENTION

However, the current collector in Patent Document 1 is produced by compressing a foam-shaped or fiber-shaped metal-sintered material with a film of negative electrode material, whose thickness is 450 to 600 μm, into a thickness of about a half of the initial thickness by means of e.g., a press. Hence, if one wishes to obtain a current

collector with a thickness of less than 100 μm, extreme deformation of the foam-shaped or fiber-shaped metal might be inevitable during compression, resulting in difficulty in sophisticated control of its three-dimensional structure.

Further, the current collector in each of the above-mentioned Patent Documents 2 and 3 has a substrate thickness of 100 μm or more, so that the current collectors fail to satisfy demands for a more compact and thinner battery. Moreover, their performances are still insufficient to meet demands for further reduction in resistance.

In light of the above-mentioned problems, an object of the present invention is to provide a current collector having a particular porous structure (which is preferably a porous composite structure) along with a reduced thickness, as well as an electrode that can achieve a sufficiently low internal resistance and has advantageous recharging and discharging characteristics.

Upon intensive research and studies, the inventors have found that the aforementioned problems are overcome by constructing an electrode comprising the configuration(s) described below, and created the present invention through further additional research and studies on the basis of this insight.

Accordingly, the present invention may encompass the following aspects of features.

1st Aspect: a current collector including a conductive body having a three-dimensional porous structure, the current collector having an air permeability of 0.1 to 600 cc/cm$^2$/sec (preferably 1 cc/cm$^2$/sec or more, more preferably 10 cc/cm$^2$/sec or more, and preferably 500 cc/cm$^2$/sec or less, and more preferably 400 cc/cm$^2$/sec or less) and a thickness of less than 100 μm (preferably less than 80 μm, more preferably less than 60 μm, further preferably less than 40 μm, and especially less than 30 μm).

2nd Aspect: the current collector of 1st Aspect, wherein the conductive body comprises a non-conductive structure with a metal coating.

3rd Aspect: the current collector of 2nd Aspect, wherein the non-conductive structure comprises a nonwoven fabric having an average fiber diameter of 5 μm or smaller.

4th Aspect: the current collector of any one of 1st to 3rd Aspects, wherein the conductive body comprises a fibrous structure having a basis weight of 1.0 to 50 g/m$^2$ as the three-dimensional porous composite structure.

5th Aspect: the current collector of any one of 1st to 4th Aspects, wherein the conductive body comprises a nonwoven fabric structure.

6th Aspect: the current collector of any one of 1st to 5th Aspects, wherein the conductive body comprises a melt-blown nonwoven fabric of a thermotropic liquid crystal wholly aromatic polyester and a metal coating formed on the nonwoven fabric.

7th Aspect: the current collector of 2nd or 6th Aspect, or any one of 3rd to 5th Aspects where depending from 2nd Aspect, wherein the metal coating comprises at least one metal selected from the group consisting of copper, nickel, gold, silver, and aluminum.

8h Aspect: the current collector of any one of 1st to 7th Aspects, wherein the conductive body comprises a fibrous structure having a breaking length of 10 kilometers or more in a length direction thereof and a breaking length of 6 kilometers or more in a width direction thereof.

9th Aspect: an electrode including a current collector of any one of 1st to 8h Aspects and an electrode material layer disposed on at least one surface of the current collector.

10th Aspect: a non-aqueous electrolyte battery including an electrode of 9th Aspect.

It should be noted that any combinations of at least two features disclosed in the claims and/or the specification should also be construed as encompassed by the present invention. Especially, any combinations of two or more of the claims should also be construed as encompassed by the present invention.

A current collector according to the present invention not only has a minimal thickness but also has a specific three-dimensional porous structure. For this reason, an electrode including such a current collector not only can achieve a minimal thickness but can also be suitably used in a non-aqueous electrolyte battery that can achieve a sufficiently low electrode resistance and has excellent recharging and discharging characteristics.

## DESCRIPTION OF EMBODIMENTS

### Current Collector

A current collector according to the present invention is a conductive body having a three-dimensional porous structure (which will hereinafter be also expressed at times as a 3D porous structure or just simply as a porous structure). Thus, the conductive body is able to guarantee electrical conduction, as well as can function as a current collector.

In this context, a three-dimensional porous structure means a structure with porosity in which air gaps are distributed in a three-dimensional volume.

Also, characteristically, a current collector according to the present invention has an air permeability of 0.1 to 600 cc/cm$^2$/sec and a thickness of less than 100 μm.

The inventors have found that a lower electrode resistance can be achieved without any loss in recharging and

discharging characteristics of an electrode by using a current collector with a specific porous structure that can be determined by its air permeability - namely, where the air permeability of the current collector is selected to be between 0.1 and 600 cc/cm$^2$/sec. This is believed to be attributable to the following reason. Electron transitions are restricted on the interface between a current collector itself and an electrode material layer, thereby giving rise to a significant resistance. Here, the provision of a three-dimensional porous structure in a current collector allows an electrolyte solution to penetrate into the interface between the current collector and an electrode material layer, thus guaranteeing ionic conduction and consequently achieving reduced electrode resistance. From the fact that there is a correlation between the air permeability of the current collector and the penetration of the electrolyte solution, adjustment of the current collector to have an air permeability of between 0.1 and 600 cc/cm$^2$/sec is believed to enhance the penetration of an electrolyte solution, resulting in reduced electrode resistance due to greater ionic conduction.

Further, the air permeability of 0.1 to 600 cc/cm$^2$/sec of the current collector enables desired battery performance to be achieved. The air permeability of the current collector below the lower limit makes penetration of an electrolyte solution poor to cause reduced ionic diffusion, resulting in failing to achieve sufficiently low resistance. For this reason, the air permeability of the current collector should be 0.1 cc/cm$^2$/sec or more, and may be preferably 1 cc/cm$^2$/sec or more, and more preferably 10 cc/cm$^2$/sec or more. On the other hand, the air permeability of the current collector above the upper limit makes porous structure deteriorate in mechanical strength, thereby impeding its durability, the production stability of electrodes, etc. Also, the reduced air permeability inhibits the contact of the current collector with an active material so that such a current collector may adversely limit electrical conduction in some cases. For this reason, the air permeability of the current collector should be 600 cc/cm$^2$/sec or less and is preferably 500 cc/cm$^2$/sec or less, and more preferably 400 cc/cm$^2$/sec or less.

The thickness of less than 100 μm of a current collector according to the present invention can mitigate increase in thickness of an electrode comprising such a current collector, so as to make it possible to provide an electrode achieving adequate capacity even in a non-aqueous electrolyte battery having a reduced thickness.

Such a reduced thickness of the current collector not only makes it easier to achieve the above-mentioned air permeability but can also mitigate a thickness increase derived from the current collector. As a result, an electrode with higher charging and discharging capacities per unit volume can be obtained. For this reason, the thickness of the current collector should be less than 100 μm and is preferably less than 80 μm, more preferably less than 60 μm, further preferably less than 40 μm, and most preferably less than 30 μm. Also, although no specific lower limit is given for the thickness of the current collector, it is preferably 5 μm or more, and more preferably 10 μm or more, from the viewpoint of avoiding possible breakage during the production of batteries and during the handling of batteries.

Three-Dimensional Porous Structure

To implement a three-dimensional porous structure that meets the foregoing requirements, the current collector can be constructed by using a fibrous structure such as a woven fabric and a nonwoven fabric (including paper), a resin foamed material such as a foamed urethane, etc. Among them, it is desirable to use a fibrous structure from the viewpoint to easily achieve the above-mentioned air permeability together with a minimal thickness.

Where using a fibrous structure as the porous structure, it is desirable that the strength of the fibrous structure be high in order to avoid possible breakage during the production of batteries and during the handling of batteries despite the above-mentioned minimal thickness. More specifically, it is desirable to use a fibrous structure having a breaking length of 10 kilometers or longer in a length direction thereof and a breaking length of 6 kilometers or longer in a width direction thereof. In this context, a length direction indicates a direction along a machine direction (MD), while a width direction indicates a transverse direction (TD) perpendicular to the machine direction. In this context, a "machine direction" refers to a direction along a direction of travel of the fibrous structure during the fabrication of the fibrous structure. Further, no specific upper limits are established therefor and can be defined as appropriate according to the type of the fibrous structure; for example, the breaking length in the length direction may be 100 kilometers or shorter. The breaking length in the width direction may be 50 kilometers or shorter.

Moreover, as far as a nonwoven fabric structure is concerned, a nonwoven fabric with an excessively short breaking length may generate a breakage by the in-process tension during a metal coating process, while a nonwoven fabric with an excessively long breaking length may result in troubles such as poor cutting performance, poor punching performance, etc. Hence, the breaking length of a nonwoven fabric according to the present invention in a length direction thereof is preferably in the range of from 10 to 100 kilometers, and more preferably in the range of from 20 to 50 kilometers. Also, the breaking length of a nonwoven fabric according to the present invention in a width direction thereof is preferably in the range of from 6 to 50 kilometers, and more preferably in the range of from 10 to 30 kilometers.

When a fibrous structure is used as the three-dimensional porous structure, the current collector may have a basis weight of 1.0 to 50 g/m$^2$. For a current collector with a given air permeability and a thickness, the current collector with a reduced basis weight can increase air permeability as well as can decrease the thickness thereof, thus, the basis weight of the current collector is preferably 15 g/m$^2$ or less, more preferably 12 g/m$^2$ or less, and further preferably 10

g/m$^2$ or less. In the meantime, the higher basis weight is desirable in terms of a mechanical strength of the current collector; therefore, the basis weight of the current collector is preferably 1.0 g/m$^2$ or more, more preferably 2.0 g/m$^2$ or more, and further preferably 3.0 g/m$^2$ or more.

The method of preparing the conductive body having a porous structure is not limited to a specific one. The porous conductive body may be formed from any known conductive material used for electrodes, or alternatively, may be obtained by imparting electrical conduction to a non-conductive structure having a porous structure (which will hereinafter be referred to at times as a non-conductive porous structure) through the formation of a metal coating by means of e.g., plating on this non-conductive porous structure so as to provide a composite material as will be later discussed. Although There is no specific limitation to the type of the conductive body, it is desirable to use a non-conductive porous structure (which is, especially, a non-conductive fiber) with a metal coating, in order to make it easier to achieve prescribed ranges of air permeability and thickness. Preferably, the conductive body may be a conductive body having a three-dimensional porous composite structure, which is obtained by forming a metal coating relative to a non-conductive porous structure (which is, especially, a non-conductive fiber) so as to provide a composite material.

Where the conductive body having the three-dimensional porous composite structure comprises a non-conductive structure with a metal coating, there is no specific limitation to, the non-conductive structure may be a known resinous foamed materials or non-conductive fibers. Examples of the non-conductive fiber include a polyolefinic fiber, a cellulosic fiber, a (meth)acrylic fiber, a polyvinyl alcohol-based fiber, a vinyl chloride-based fiber, a styrene-based fiber, a polyester-based fiber, a polyamide-based fiber, a polycarbonate-based fiber, and a urethane-based fiber. Among these fibers, a polyester-based fiber such as a polyethylene terephthalate fiber, a polybutylene terephthalate fiber, a polytrimethylene terephthalate fiber, and a thermotropic liquid crystal wholly aromatic polyester can be suitably used from the viewpoint of helping achieve the aforementioned strength. Among such polyester fibers, a thermotropic liquid crystal wholly aromatic polyester, for example, can be particularly desirable for use.

A thermotropic liquid crystal wholly aromatic polyester constituting a fiber of thermotropic liquid crystal wholly aromatic polyester is a resin having excellent thermal resistance and chemical resistance. Herein, thermotropic liquid crystallinity refers to a property capable of forming an optically anisotropic melt phase (liquid crystallinity), and thermotropic liquid crystal wholly aromatic polyester means a polyester indicating the thermotropic liquid crystallinity. The property of "thermotropic liquid crystallinity" can be recognized, for example, by placing a sample on a hot stage to heat under a nitrogen atmosphere and observing penetration light through the sample. The thermotropic liquid crystal wholly aromatic polyester comprises repeating structural units originating from, for example, aromatic diols, aromatic dicarboxylic acids, aromatic hydroxycarboxylic acids, etc. As long as the effect of the present invention is not spoiled, the repeating structural units originating from aromatic diols, aromatic dicarboxylic acids, aromatic hydroxycarboxylic acids are not limited to a specific chemical composition. The thermotropic liquid crystal wholly aromatic polyester may include the structural units originating from aromatic diamines, aromatic hydroxy amines, or aromatic aminocarboxylic acids in the range which does not spoil the effect of the present invention. For example, the preferable structural units may include units shown in Table 1.

Table 1

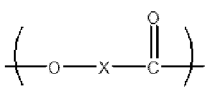 , 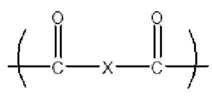 , 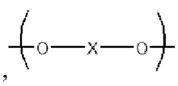 , 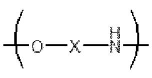

In the formula, X is selected from the following

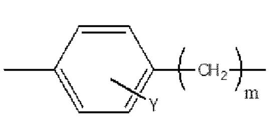 , 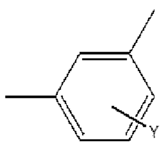 , 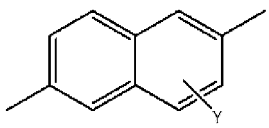 ,

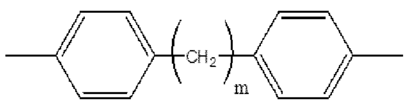 , 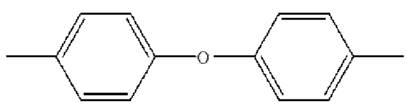 ,

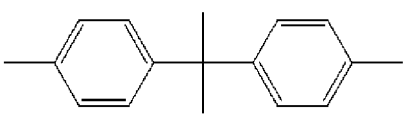 , 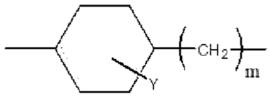 , 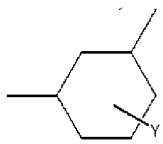

(continued)

m is an integer from 0 to 2, Y is a substituent selected from hydrogen atom, halogen atoms, aryl groups, aralkyl groups, alkoxy groups, aryloxy groups, aralkyloxy groups.

Y independently represents, as a substituent(s) which can be replaced from one substituent to the number of substituents in the range of the replaceable maximum number of aromatic ring. More specifically the substituent(s) can be selected from the group consisting of a hydrogen atom, a halogen atom (for example, fluorine atom, chlorine atom, bromine atom and iodine atom), an alkyl group (for example, an alkyl group having 1 to 4 carbon atoms such as methyl group, ethyl group, isopropyl group and t-butyl group), an alkoxy group (for example, methoxy group, ethoxy group, isopropoxy group, n-butoxy group, etc.), an aryl group (for example, phenyl group, naphthyl group, etc.), an aralkyl group [benzyl group (phenylmethyl group), phenethyl group (phenylethyl group)], an aryloxy group (for example, phenoxy group etc.), an aralkyloxy group (for example, benzyloxy group etc.), and others.

As more preferable structural units, there may be mentioned structural units as described in Examples (1) to (18) shown in the following Tables 2, 3, and 4. It should be noted that where the structural unit in the formula is a structural unit which can show a plurality of structures, combination of two or more units may be used as structural units for a polymer.

Table 2

| | |
|---|---|
| (1) | 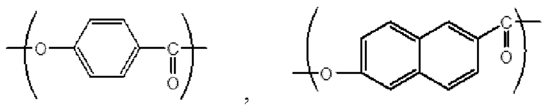 |
| (2) | 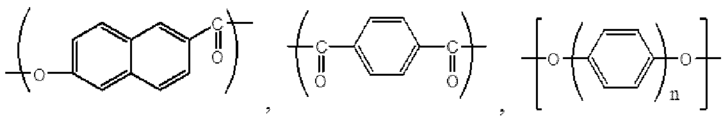 |
| (3) | 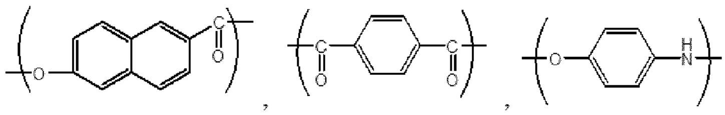 |
| (4) | 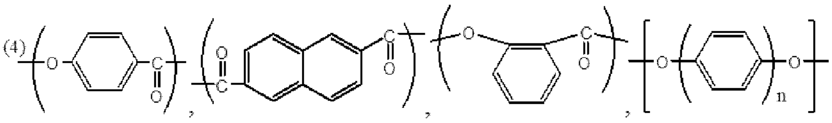 |
| (5) | 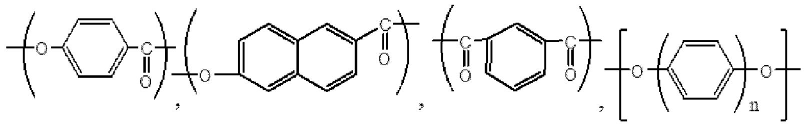 |
| (6) | 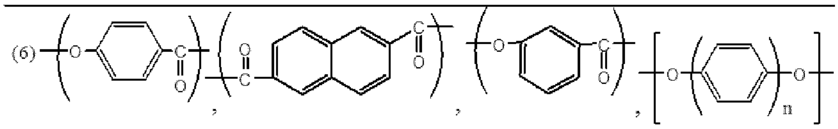 |
| (7) | 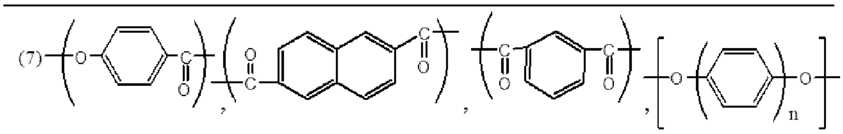 |
| (8) | 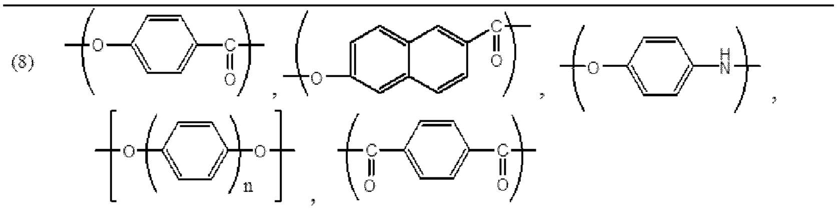 |

Table 3

| | |
|---|---|
| (9) | 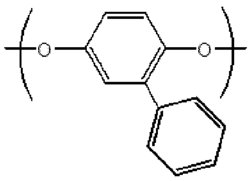 , 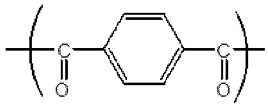 |
| (10) | 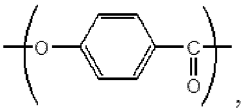 , 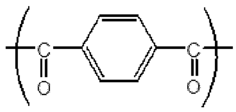 , 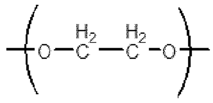 |
| (11) | 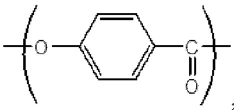 , 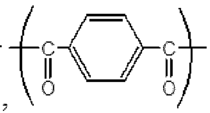 , 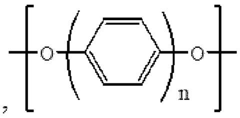 , 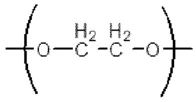 |
| (12) | 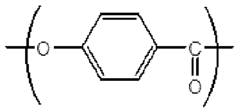 , 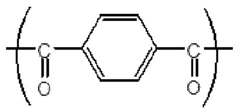 , 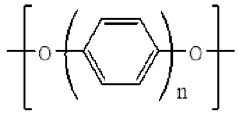 |
| (13) | 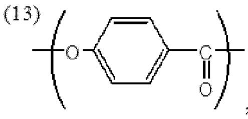 , 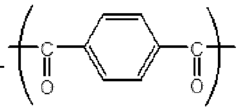 , 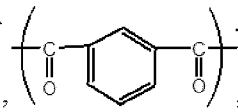 , 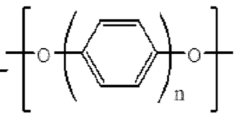 |
| (14) | 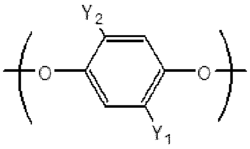 , 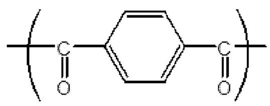 , 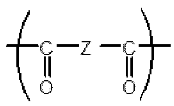 |
| (15) | 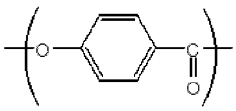 , 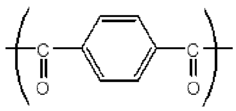 , 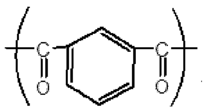 , 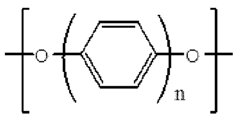 , 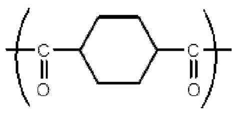 |

Table 4

| | |
|---|---|
| (16) | 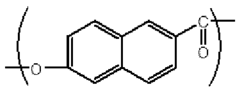, 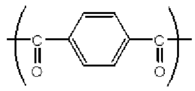, 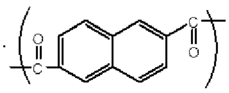, 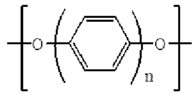 |
| (17) | 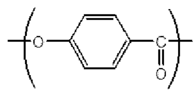, 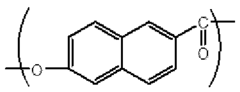, 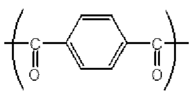, 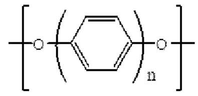 |
| (18) | 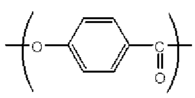, 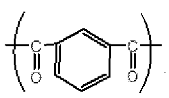, 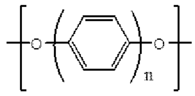 |

In the structural units shown in Tables 2, 3, and 4, n is an integer of 1 or 2, in each of the structural units, n = 1 and n = 2 may independently exist, or may exist in combination; each of the $Y_1$ and $Y_2$ independently represents, hydrogen atom, a halogen atom, (for example, fluorine atom, chlorine atom, bromine atom, iodine atom, etc.), an alkyl group (for example, an alkyl group having 1 to 4 carbon atoms such as methyl group, ethyl group, isopropyl group, and t-butyl group, etc.), an alkoxy group (for example, methoxy group, ethoxy group, isopropoxy group, n-butoxy group, etc.), an aryl group (for example, phenyl group, naphthyl group, etc.), an aralkyl group [benzyl group (phenylmethyl group), phenethyl group (phenylethyl group), etc.], an aryloxy group (for example, phenoxy group etc.), an aralkyloxy group (for example, benzyloxy group etc.), and others. Among these, the preferable $Y_1$ and $Y_2$ may include hydrogen atom, chlorine atom, bromine atom, and methyl group.

Z may include substituents denoted by following formulae.

Chem. 1

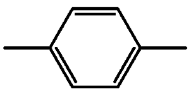, 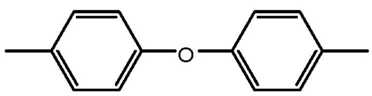, 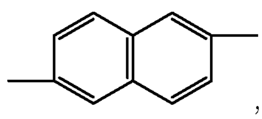,

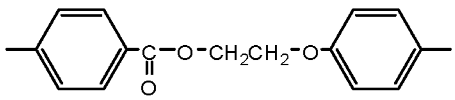, 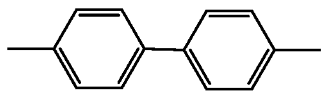

Preferable thermotropic liquid crystal wholly aromatic polyesters may comprise a combination of two or more structural units having a naphthalene skeleton. Especially preferable one may include both the structural unit (A) derived from hydroxybenzoic acid and the structural unit (B) derived from hydroxy naphthoic acid. For example, the structural unit (A) may have a following formula (A), and the structural unit (B) may have a following formula (B). From the viewpoint of ease of enhancing melt-spinnability, the ratio of the structural unit (A) and the structural unit (B) may be in a range of former/latter of from 9/1 to 1/1, more preferably from 7/1 to 1/1, still preferably from 5/1 to 1/1.

Chem. 2

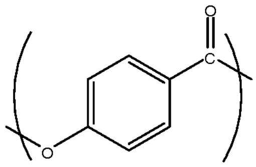

··· (A)

Chem. 3

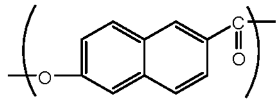

··· (B)

The total proportion of the structural units of (A) and (B) may be, based on all the structural units, for example, greater than or equal to 65 mol%, more preferably greater than or equal to 70 mol%, and still more preferably greater than or equal to 80 mol%. Especially referred thermotropic liquid crystal wholly aromatic polyesters have the structural unit (B) at a proportion of from 4 to 45 mol% in the polymers.

The thermotropic liquid crystal wholly aromatic polyester suitably used in the present invention preferably has a melting point in the range from 250 to 360°C, and more preferably from 260 to 320°C. The melting point here means a temperature at which a main absorption peak is observed in measurement in accordance with JIS K7121 examining method using a differential scanning calorimeter (DSC: "TA3000" produced by Mettler). More concretely, after taking 10 to 20 mg of a sample into the above-mentioned DSC apparatus to enclose the sample in an aluminum pan, the sample is heated at a heating rate of 20°C/minute with nitrogen as carrier gas introduced at a flow rate of 100 cc/minute to measure the position of an appearing endothermic peak. Depending on the type of polymer, where a clear peak does not appear in the first run in the DSC measurement, the sample is heated to a temperature higher by 50°C than the expected flow temperature at a heating rate of 50°C/minute and is kept at the temperature for 3 minutes to be completely molten, and the melt is quenched to 50°C at a rate of -80°C/minute. Subsequently, the quenched material is reheated at a heating rate of 20°C/minute, and the position of an appearing endothermic peak may be recorded.

The thermotropic liquid crystal wholly aromatic polyester may further comprise a thermoplastic polymer such as a polyethylene terephthalate, a modified polyethylene terephthalate, a polyolefin, a polycarbonate, a polyamide, a polyphenylene sulfide, a polyetheretherketone, and a fluororesin to the extent that the effect of the invention is not spoiled. In addition, various additives such as inorganic materials such as titanium dioxide, kaolin, silica, and barium oxide; coloring agents such as a carbon black, a dye, and a pigment; an antioxidant, a UV absorber, and a light stabilizer may also be added.

Among the foregoing, preferable thermotropic liquid crystal wholly aromatic polyester used according to the present invention may comprise a structural composition from para-hydroxy benzoic acid and 6-hydroxy-2-naphthoic acid as principal components thereof or a structural composition from para-hydroxy benzoic acid, 6-hydroxy-2-naphthoic acid, a terephthalic acid, and a biphenol as principal components thereof.

A nonwoven fabric incorporating a thermotropic liquid crystalline polyester is preferably a melt-blown nonwoven fabric obtained by means of a melt blowing method. Any known melt blowing method can be employed. For example, a method can be performed by discharging a thermotropic liquid crystal wholly aromatic polyester in the form of a polymer melt from multiple nozzle holes arranged in a row, ejecting hot air at high air velocity from air slots positioned adjacent to the orifice die to form fine fibers from the discharged polymer melt, and subsequently collecting the resulting fine fiber-air turbulences on a collector in the form of, e.g., a conveyor net to produce a nonwoven fabric. The obtained nonwoven fabric can also be heat-treated to impart thermal resistance thereto. The heating temperature in the course of this treatment is preferably a temperature of Mp - 40°C (i.e., a temperature of melting point (Mp) of the thermotropic liquid crystal wholly aromatic polyester minus 40°C) or higher, and a temperature of Mp + 20°C (i.e., a temperature of melting point (Mp) of the thermotropic liquid crystal wholly aromatic polyester plus 20°C) or lower. The duration of the heat treatment performed is preferably at least 3 hours. Examples of the gas used as a heating medium in the course of the heat treatment include nitrogen, oxygen, argon, carbonic acid gas, a gas mixture thereof, air, etc. From the viewpoint of cost saving, oxygen or air is more preferred. The heat treatment may be conducted under tension or under no tension depending on its purpose.

Preferably, the melt viscosity of the thermotropic liquid crystal wholly aromatic polyester is 20 Pa s or less as measured at 310°C. Where a thermotropic liquid crystal wholly aromatic polyester has a melt viscosity of more than 20 Pa s as measured at 310°C, such a polyester may be unpreferable because it may have difficulty in ultrafine fiberization

or have a possibility to form of oligomers during polymerization or to cause troubles during polymerization or granulation. Meanwhile, the thermotropic liquid crystal wholly aromatic polyester preferably has a melt viscosity of 5 Pa's or more as measured at 310°C. Where a thermotropic liquid crystal wholly aromatic polyester has an excessively low melt viscosity, it may also have difficulty in fiberization. This melt viscosity of the thermotropic liquid crystal wholly aromatic polyester as measured at 310°C refers to a value determined using, for example, a Melt Indexer L244 (available from Takara Kogyo Co., Ltd.).

It should be noted that a commonly used additive such as a colorant, an inorganic filler, an antioxidant, and an ultraviolet absorber, as well as a thermoplastic elastomer can be added, where necessary, to the above-mentioned thermotropic liquid crystal wholly aromatic polyester to the extent that the effect of the invention is not spoiled (e.g., 10% by weight or less).

Among the fibrous structures, a nonwoven fabric structure is preferred from the viewpoint of avoiding complicated production steps, strength retainment, and softness retainment, and from the viewpoint of controlling the point of contact in the course of formation of a metal coating. Examples of the type of the nonwoven fabric may include a wet-laid nonwoven fabric, a dry-laid nonwoven fabric, a melt-blown nonwoven fabric, a spunlace nonwoven fabric, a thermal-bonded nonwoven fabric, and a needle-punched nonwoven fabric. Among these nonwoven fabrics, a nonwoven fabric with a smaller fiber diameter and a longer fiber length as well as a melt-blown nonwoven fabric are preferable. In particular, where a conductive body comprises a melt-blown nonwoven fabric of a thermotropic liquid crystal wholly aromatic polyester and a metal coating thereon, it is possible to produce a current collector with a minimal thickness as described above.

More particularly, the average fiber diameter of fibers constituting the nonwoven fabric is preferably in the range of from 0.1 to 5 μm. This is because an average fiber diameter of less than 0.1 μm promotes generation of fluffs which turn into a fiber aggregate, while an average fiber diameter of more than 10 μm results in a rough texture which leads to insufficient electrical conduction upon the metal-coating. The average fiber diameter of fibers constituting the melt-blown nonwoven fabric is preferably in the range of from 0.5 to 4 μm, and further preferably in the range of from 1 to 3 μm. It should be noted that the average fiber diameter of fibers constituting a melt-blown nonwoven fabric according to the present invention refers to an average value of the measurements of the fiber diameters of randomly selected 100 fibers, on a micrograph of the nonwoven fabric as captured under a given magnification with a scanning electron microscope.

Where adopting a nonwoven fabric in the form of three-dimensional porous structure, it is preferred to use a melt-blown nonwoven fabric which contains, as a principal component thereof, such a thermotropic liquid crystal wholly aromatic polyester.

Metal Coating

Where a conductive body according to the present invention is represented by a non-conductive structure with a metal coating, the metal coating is provided preferably applied to a fibrous structure, and particularly preferably to a nonwoven fabric structure, from the viewpoint of avoiding complicated production steps, strength retainment, and softness retainment, and from the viewpoint of controlling the point of contact in the course of formation of the metal coating. A metal coating containing at least one member selected from the group consisting of copper, nickel, gold, silver, or aluminum is preferred. Among them, a layered coating containing at least one member selected from the group consisting of copper, nickel, gold, or aluminum is particularly preferred in terms of significant electrical conduction, the formability of the metal coating, etc. Among these, an especially preferable coating may contain at least one member selected from the group consisting of copper, nickel, and aluminum, due to superior economic performance and electrical conduction. Such a metal coating may be formed of a plurality of layers; for example, a first metal layer may be formed on the non-conductive structure, while a second metal layer may, in turn, be formed on the first metal layer.

The surface resistance of a conductive body according to the present invention may vary depending on the type and thickness of the metal coating, and is preferably in the range of from $10^{-3}$ to $10^{0}$ Ω/sq, and more preferably in the range of from $10^{-3}$ to $10^{-1}$ Ω/sq from the viewpoint of ensuring sufficient electrical conduction.

Although any conventionally known method such as electroplating, electroless plating, sputtering, and vacuum deposition can be used as a method to form the metal coating, a method involving electroless plating is preferred from the viewpoint of sufficient electrical conduction. Although There is no specific limitation to and any conventionally known method can be used as the electroless plating process, a common method includes a method applying a catalyst to a non-conductive structure substrate (e.g., the fiber surface of a nonwoven fabric) and then immersing thus-obtained substrate into a chemical plating bath in which a metal salt, a reducing agent, and a buffer agent are dissolved to form a metal coating.

There is no specific limitation on the thickness of the metal coating of a current collector (or a conductive body) according to the present invention, as long as a prescribed air permeability and thickness of the current collector can be achieved; for example, the thickness of the metal coating may be in the range of from 0.05 to 10 μm or in the range

of from 0.1 to 5 μm. Nevertheless, from the viewpoint of controlling the air permeability of the current collector while providing the above-mentioned surface resistance, it is more preferred to be 4 μm or less, and more preferably 2 μm or less. A thickness of less than 0.05 μm of the metal coating may fail to achieve adequate electrical conduction, while a thickness of more than 10 μm of the metal coating has an unpreferable possibility to jeopardize the softness and flexibility of the current collector.

Where forming the metal coating, for example, a non-conductive structure having an air permeability of 0.2 to 800 cc/cm$^2$/sec may be metal-coated to form a metal coating, to obtain a current collector having an air permeability of 0.1 to 600 cc/cm$^2$/sec.

For example, the non-conductive structure (e.g., a non-conductive, melt-blown nonwoven fabric) preferably has an air permeability of from 0.2 to 800 cc/cm$^2$/sec. An air permeability of more than 800 cc/cm$^2$/sec of a non-conductive structure makes it harder to set the air permeability of the current collector to be in the aforementioned range and, as a result, makes it difficult to achieve the desired low resistance. For this reason, the non-conductive structure preferably has an air permeability of 800 cc/cm$^2$/sec or less, more preferably 700 cc/cm$^2$/sec or less, and further preferably 600 cc/cm$^2$/sec or less. Also, although no specific lower limit is set for the air permeability of the non-conductive structure, the air permeability is preferably 0.2 cc/cm$^2$/sec or more, and more preferably 1 cc/cm$^2$/sec or more from the viewpoint of mechanical strength and electrical conduction after coating with the metal.

Further, the non-conductive structure (e.g., a non-conductive, melt-blown nonwoven fabric) preferably has a thickness of 5 μm or more and less than 100 μm. A thickness of less than 5 μm of a non-conductive structure may be more prone to a breakage during the production of batteries and during the handling of batteries. A thickness of 100 μm or more of a non-conductive structure may fail to satisfy a demand for a thinner current collector. Accordingly, the non-conductive structure preferably has a thickness of 5 μm or more and less than 100 μm, is more preferably in the range of from 7 to 30 μm, and further preferably in the range of from 9 to 20 μm.

## Electrode

An electrode according to the present invention includes the current collector and an electrode material layer disposed on at least one surface of the current collector. In this context, the expression that an electrode material layer is disposed on surface(s) of a current collector means that the electrode material layer includes a portion adjoining the current collector and encompasses those scenarios in which a portion of the electrode material layer penetrates inside the current collector.

## Negative Electrode

A negative electrode that employs a current collector according to the present invention includes the current collector and a negative electrode active material layer (i.e., an electrode material layer) formed on the current collector, with the negative electrode active material layer containing a negative electrode active material.

There is no specific limitation to the negative electrode active material, and any known negative electrode active material can be used. Examples of the negative electrode active materials may include a substance capable of exerting reversible intercalation/deintercalation of lithium ions, and may include a lithium metal, a lithium metal alloy, a substance capable of doping into and dedoping from lithium, or a transition metal oxide.

Any carbonaceous substance in the form of a carbonaceous negative electrode active material commonly used in, for example, lithium-ion secondary batteries, can be used as the above-mentioned substance capable of exerting reversible intercalation/deintercalation of lithium ions. As representative examples thereof, crystalline carbon, non-crystalline carbon, or a combination thereof can be cited for use. Examples of the mentioned crystalline carbon include graphites, such as natural or artificial graphites, that are irregularly-shaped, planar, flake, spheroidal, or fibrous. Examples of the mentioned non-crystalline carbon include soft or hard carbon, a mesophase pitch carbide, and calcined coke. These can even be put in the Li-intercalated state in advance for use.

For the above-mentioned lithium metal alloy, an alloy of lithium and metal(s) selected from the group consisting of Na, K, Rb, Cs, Fr, Be, Mg, Ca, Sr, Si, Sb, Pb, In, Zn, Ba, Ra, Ge, Al, and Sn can be used.

Examples of the above-mentioned substance capable of doping into and dedoping from lithium include Si, $SiO_x$ ($0 < x < 2$), an Si-Q alloy (in which Q represents element(s) that is/are different from Si and selected from the group consisting of an alkali metal, an alkaline earth metal, a Group 13 element, a Group 14 element, a Group 15 element, a Group 16 element, a transition metal, a rare earth element, and any combination thereof), Sn, Sn02, and Sn-R (in which R represents element(s) that is/are different from Sn and selected from the group consisting of an alkali metal, an alkaline earth metal, a Group 13 element, a Group 14 element, a Group 15 element, a Group 16 element, a transition metal, a rare earth element, and any combination thereof). Furthermore, a mixture of at least one of these with $SiO_2$ may be used therefor. For the above-mentioned elements Q and R, elements(s) selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au,

Zn, Cd, B, Al, Ga, Sn, In, Ti, Ge, P, As, Sb, Bi, S, Se, Te, Po, and any combination thereof can be used.

Examples of the above-mentioned transition metal oxide include a vanadium oxide and a lithium vanadium oxide.

The content of the negative electrode active material in the above-mentioned negative electrode active material layer may be 95 to 99% by weight relative to the total weight of the negative electrode active material layer (or the total weight of the solid content of a slurry).

The above-mentioned negative electrode active material layer may further contain a binder and may optionally also contain a conductive agent (or a conductive additive). The content of the binder in the above-mentioned negative electrode active material layer may be from 1 to 5% by weight relative to the total weight of the negative electrode active material layer. Moreover, where the conductive agent is also contained, 90 to 98% by weight of the negative electrode active material, 1 to 5% by weight of the binder, and 1 to 5% by weight of the conductive agent may be used.

The above-mentioned binder plays the role to allow particles of the negative electrode active material adhered to each other as well as to allow negative electrode active material adhered to the current collector. As the above-mentioned binder, a water-insoluble binder, a water-soluble binder, or any combination thereof may be used.

Examples of the water-insoluble binder may include a polyvinyl chloride, a carboxylated polyvinyl chloride, a polyvinyl fluoride, an ethylene oxide-containing polymer, a polyvinyl pyrrolidone, a polyurethane, a polytetrafluoroethylene, a polyvinylidene fluoride, a polyethylene, a polypropylene, a polyamideimide, a polyimide, or any combination thereof.

Examples of the above-mentioned water-soluble binder may include a styrene-butadiene rubber, an acrylated styrene-butadiene rubber, a polyvinyl alcohol, a sodium polyacrylate, a copolymer of propylene and a $C_2$ to $C_8$ olefin, a copolymer of a (meth)acrylic acid and an alkyl (meth)acrylate ester, a copolymer of a $C_2$ to $C_8$ olefin and a maleic acid, alkali metal salt(s) thereof, or any combination thereof, etc. Further, these water-soluble binders may be partially neutralized with a basic substance containing a metal for application in order to reduce a resistance thereof.

Where the water-soluble binder is used as the above-mentioned binder for a negative electrode, a cellulosic compound capable of imparting viscosity can also be incorporated for use as a thickening agent. As the cellulosic compound, there may be used a carboxymethyl cellulose, a hydroxypropyl methyl cellulose, a methyl cellulose, alkali metal salt(s) thereof, etc., or any mixture thereof. As the mentioned alkali metal, Na, K, or Li may be used. The content of such a thickening agent used may be 0.1 to 3 parts by weight relative to 100 parts by weight of the binder.

The conductive agent is used to impart electrical conduction to the electrode, and any electron-conductive material can be used therefor as long as it does not chemically alter the battery it constitutes. As examples thereof, there may be used a carbonaceous material such as natural graphite, artificial graphite, carbon black, acetylene black, ketjen black, and carbon fiber; metallic material such as powder or fiber of metal, e.g., copper, nickel, aluminum, silver, etc.; a conductive polymer such as a polyphenylene derivative; or a conductive material containing any mixture thereof.

The negative electrode may be obtained by preparing a negative electrode slurry with a solvent and applying the same onto the current collector, as will be the case with a positive electrode that will be later discussed. The negative electrode may be prepared by mixing the above-mentioned active material and, where necessary, the conductive agent, the binder, etc., to be kneaded, and shaping the resultant mixture into a sheet which is disposed, as the form of a negative electrode active material layer, on the above-mentioned current collector for a molding operation. Alternatively, the negative electrode may be prepared by preparing an ink-like slurry of the active material, the conductive agent, and the binder, coating the slurry onto the current collector to be dried for a molding operation to provide a negative electrode active material layer.

No limit is given for the thickness of the negative electrode active material layer as this may vary depending on a production process and the desired performance of a battery. The thickness of the shaped layer is typically from 10 to 200 $\mu$m, and more preferably from 20 to 150 $\mu$m or from 25 to 130 $\mu$m by taking into account the electric capacity of the battery and in view of the combination with a positive electrode.

Positive Electrode

A positive electrode that employs a current collector according to the present invention includes the current collector and a positive electrode active material layer (i.e., an electrode material layer) formed on the current collector, with the positive electrode active material layer containing a positive electrode active material.

There is no specific limitation to the positive electrode active material, and any known positive electrode active material can be used; examples may include a lithium-containing cobalt oxide (LiCo02), lithium manganate (LiMn204), a lithium-containing nickel oxide (LiNi02), a lithium-containing composite oxide of Co-Ni-Mn, a lithium-containing composite oxide of Ni-Mn-Al, a lithium-containing composite oxide of Ni-Co-Al, an olivine-type lithium iron phosphate ($LiFePO_4$), an olivine-type lithium manganese phosphate (LiMnP04), a spinel compound with excess lithium represented as $Li_{1+x}Mn_{2-x}O_4$ (0< X < 2), $Li[Ni_{0.17}L_{0.2}Co_{0.07}Mn_{0.56}]O_2$, a metal oxide such as $LiNi_{0.5}Mn_{1.5}O_4$, a compound and a polymer with a sulfur radical, a compound and a polymer with a nitroxyl radical, a compound and a polymer with an oxy radical, a compound and a polymer with a nitrogen radical, and an organic radical such as a compound and a polymer

with a fulvalene backbone. In addition, where a battery exploiting capacitive adsorption like a lithium-ion capacitor is produced, there may be mentioned a carbonaceous material as well as an inorganic material, both having a large specific surface area, such as activated carbon, mesoporous carbon, and a titanium oxide with vacancies, a conductive ceramic and others.

These positive electrode active materials can be used alone, or combination of two or more. Among the foregoing, it is preferred to use, as the positive electrode active material, a lithium-containing cobalt oxide (LiCo02); a lithium-containing nickel oxide (LiNi02); a lithium-containing composite oxide of Co-Ni-Mn such as, for example, $LiNi_{1/3}Co_{1/3}Mn_{1/3}O_2$, $LiNi_{0.5}Co_{0.2}Mn_{0.3}O_2$, and $LiNi_{0.8}Co_{0.1}Mn_{0.1}O_2$; or a lithium-containing composite oxide of Ni-Co-Al such as, for example, $LiNi_{0.8}Co_{0.1}Al_{0.1}O_2$ and $LiNi_{0.8}Co_{0.15}Al_{0.05}O_2$, from the viewpoint of improving the battery capacity of a secondary battery, etc.

It should be noted that there is no specific limitation on the particle size of the positive electrode active material and that the particle size of the positive electrode active material can be comparable to that of a conventionally-used positive electrode active material. Typically, those with a particle size in the range of from 0.1 to 40 μm, and more preferably in the range of from 0.5 to 20 μm may be used.

The content of the positive electrode active material in the positive electrode active material layer may be 90 to 40% by weight relative to the total weight of the positive electrode active material layer (or the total weight of the solid content of a slurry).

Preferably, a slurry for the positive electrode may contain a binder to allow particles of the positive electrode active material adhered to each other as well as to allow positive electrode active material adhered to the current collector. Examples of the binder may include a water-insoluble binder and a water-soluble binder as recited as examples of the binder for the negative electrode, such as, for example, a polyvinyl alcohol, a carboxymethyl cellulose, a hydroxypropyl cellulose, a diacetyl cellulose, a polyvinyl chloride, a carboxylated polyvinyl chloride, a polyvinyl fluoride, a polymer including an ethylene oxide, a polyvinyl pyrrolidone, a polyurethane, a polytetrafluoroethylene, a polyvinylidene fluoride, a polyethylene, a polypropylene, a styrene-butadiene rubber, an acrylated styrene-butadiene rubber, an epoxy resin, and nylon but are not limited thereto. These binders can be used alone or combination of two or more.

The content of the above-mentioned binder in the slurry for the positive electrode may be 5 to 10% by weight relative to the total weight of the solid content in the slurry.

The slurry for the positive electrode may further contain a conductive agent (or a conductive additive) for improving the electrical conduction of the positive electrode to be formed on the current collector. As the conductive agent, any electron-conductive material can be used so long as it does not chemically alter the electrochemical device it constitutes. Particular examples of the conductive agent may include natural graphite, artificial graphite, carbon black, acetylene black, ketjen black, carbon fiber, and powder or fiber of metal e.g., copper, nickel, aluminum, or silver, etc. Also, at least one conductive material such as a polyphenylene derivative may be mixed therewith for use.

The content of the conductive material in the slurry for the positive electrode may be 1 to 10% by weight relative to the total weight of the solid content in the slurry.

As a solvent used in the slurry for the positive electrode, there may be exemplified an organic solvent, especially preferably the following kinds of polar organic solvent capable of dissolving a binder.

Specifically, as the organic solvent, there may be mentioned acetonitrile, N-methyl pyrrolidone, acetyl pyridine, cyclopentanone, N,N-dimethyl acetamide, dimethylformamide, dimethyl sulfoxide, methylformamide, methyl ethyl ketone, furfural, ethylene diamine, etc. can be used. Among these, N-methyl pyrrolidone (NMP) is most preferred in terms of handle ability, safety, ease of synthesis, etc.

It should be noted that these organic solvents can be used alone or combination of two or more.

The solvent can be used in such an amount that the concentration of the solid content in the slurry for the positive electrode is preferably in the range of from 1 to 80% by weight, more preferably 5 to 70% by weight, and further preferably 10 to 60% by weight. The above-mentioned range of the concentration as the solid content is desirable from the viewpoint that the positive electrode active material and the other components contained can be evenly dispersed.

The method to prepare the slurry for the positive electrode can involve mixing the above-mentioned positive electrode active material and, where necessary, other component(s), with the above-mentioned solvent. There is no specific limitation to the mixing method; for example, a typical mixing device such as a disperser, a mill, or a kneader can be employed. For example, it is preferably agitated for a duration of 20 minutes or longer to 120 minutes or shorter.

There is also no specific limitation on the temperature at which the mixing is carried out; for example, the mixing may be conducted at a temperature in the range of from 0 to 160°C, and more preferably in the range of from 20 to 80°C. An excessively low temperature may be unpreferable from the viewpoint of high viscosity as well as disadvantageous for coating operation, while an excessively high temperature may be unpreferable in terms of safety and device operability for reasons such as evaporation of the organic solvent and an associated change in viscosity.

The above-mentioned positive electrode, which is prepared using the slurry for the positive electrode, includes the current collector and the positive electrode active material layer. The mentioned positive electrode active material layer can be obtained by mixing the above-mentioned active material and, where necessary, the conductive agent, the

binder, etc., to be kneaded, and shaping the resultant mixture into a sheet which is disposed, as the form of a positive electrode active material layer, on the above-mentioned current collector for a molding operation. Alternatively, the slurry for the positive electrode can be applied (or coated) onto the current collector to be dried on the above-mentioned current collector, to form a positive electrode active material layer.

There is no specific limitation to and any known method can be used for the method to apply the slurry for the positive electrode onto the current collector. Specifically, a doctor blade method, a dip method, a reverse roll method, a direct roll method, a gravure method, an extrusion method, a brush method, etc. can be used as the application method. The slurry for the positive electrode may be applied only to one side of the current collector or may be applied to both sides of the current collector. The thickness of the film of the slurry applied on the current collector prior to the drying thereof can be decided as appropriate in accordance with the thickness of the resulting post-drying positive electrode composite layer.

There is no specific limitation to and any known method can be used for the method to dry the slurry for the positive electrode on the current collector. Examples may include drying with the use of warm air, hot air, or low-humidity air, vacuum drying, and a drying method by means of exposure to an infrared radiation, electron beam, etc. By thus drying the slurry for the positive electrode of an electrochemical device on the current collector, the positive electrode active material layer can be formed on the current collector, yielding a positive electrode that includes the current collector and the positive electrode active material layer.

Preferably, the drying step is conducted by drying the slurry for the positive electrode on the current collector at a drying temperature of 100°C or higher and 160°C or lower under an atmospheric pressure or under a reduced pressure for a duration of 1 hour to 12 hours.

It should be noted that, after the drying step, the positive electrode active material layer may be subjected to a compression treatment by means of, e.g., a die press or a roll press. The compression treatment can improve the adhesion between the positive electrode active material layer and the current collector.

No limit is given for the thickness of the positive electrode active material as this may vary depending on a production process and the desired performance of a battery. The thickness of the shaped layer is typically from 10 to 200 μm, and more preferably from 20 to 150 μm or from 25 to 130 μm by taking into account the electric capacity of the battery and in view of the combination with a negative electrode.

Non-Aqueous Electrolyte Battery

A non-aqueous electrolyte battery according to the present invention at least includes the above-mentioned electrode. Typically, the non-aqueous electrolyte battery includes a positive electrode, a negative electrode, an electrolyte, and a separator. It should be noted that a current collector according to the present invention may be used in both of the positive electrode and the negative electrode, or one of the positive electrode or the negative electrode of the non-aqueous electrolyte battery. Where a current collector according to the present invention is used in only one of the electrodes, any known or commonly used current collector (e.g., a copper foil, a nickel foil, or an aluminum foil) with electrical conduction and an electrochemical durability may be used as a current collector in the other one of the electrodes where a current collector according to the present invention is not used.

Electrolyte

Preferably, the electrolyte contains at least a non-aqueous organic solvent and a lithium salt.

The non-aqueous organic solvent plays the role as a medium in which ions contributing to electrochemical reactions in the battery can be transported.

As the non-aqueous organic solvent, there may be used a carbonate solvent, an ester solvent, an ether solvent, a ketone solvent, an alcohol solvent, or an aprotic solvent. As the carbonate solvent, there may be used dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC), butylene carbonate (BC), etc. As the ester solvent, there may be used n-methyl acetate, n-ethyl acetate, n-propyl acetate, dimethyl acetate, methyl propionate, ethyl propionate, γ-butyrolactone, decanolide, valerolactone, mevalonolactone, caprolactone, etc. As the mentioned ether, there may be used dibutyl ether, tetraglyme, diglyme, dimethoxy ethane, 2-methyltetrahydrofurane, tetrahydrofuran, etc. As the ketone solvent, there may be used cyclohexanone, etc. As the mentioned alcohol solvent, there may be used ethyl alcohol, isopropyl alcohol, etc. As the aprotic solvent, there may be used nitriles such as R-CN (wherein R is a linear, branched, or cyclic $C_2$ to $C_{20}$ hydrocarbon group and may contain a double-bond aromatic ring or an ether bond), amides such as dimethyl formamide, dioxolanes such as 1,3-dioxolane, sulfolanes, etc.

The above-mentioned non-aqueous organic solvent may be used alone or combination of two or more, and the mixing ratio for such a mixture used can be adjusted as appropriate according to the intended performance of the

battery.

Also, in case of the carbonate solvent, it is preferable to use a mixture of a cyclic carbonate and a linear carbonate. In this case, the mixture of a cyclic carbonate and a linear carbonate may have a volume ratio of 1:1 to 1:9 to indicate an electrolyte solution with superior performance.

The lithium salt is a substance which, by being dissolved in the organic solvent, plays the role of acting as a source of supply of lithium ions in a lithium-ion secondary battery to enable the fundamental battery operation and promote the transport of the lithium ions between a positive electrode and a negative electrode thereof. Representative examples of such a lithium salt include $LiPF_6$, $LiBF_4$, $LiSbF_6$, $LiAsF_6$, $LiCF_3SO_3$, $LiN(SO_2C_2F_5)_2$, $Li(CF_3SO_2)_2N$, $LiC_4F_9SO_3$, $LiClO_4$, $LiAlO_4$, $LiAlCl_4$, $LiN(C_xF_{2x+1}SO_2)$, $LiN(C_yF_{2y+1}SO_2)$, LiCl, LiI, $LiB(C_2O_4)_2$ (i.e., lithium bis(Oxalate)borate (LiBOB)), etc. (wherein x and y are natural numbers). These may be used alone, or combination of two or more. The lithium salt may be used at a concentration in the range of from 0.1 to 2.0 M. The lithium salt having a concentration of lower than 0.1 M may reduce the electrical conduction of the electrolyte to such a degree that the performance of the electrolyte tends to deteriorate, while the lithium salt having a concentration of higher than 2.0 M may increase the viscosity of the electrolyte such that the transport of the lithium ions is inclined to reduced.

The above-mentioned electrolyte may further contain a vinylene carbonate compound or an ethylene carbonate compound as a battery-life improving agent to improve the service life of the battery.

Representative examples of the ethylene carbonate compound may include difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. Where such a battery-life improving agent is also used in the electrolyte, it is used in an amount that can be adjusted as appropriate.

Separator

A separator may be present between the positive electrode and the negative electrode of a non-aqueous electrolyte battery according to the present invention. Any known or commonly used separator can serve as such a separator; for example, a polyethylene membrane, a polypropylene membrane, or a polyvinylidene fluoride membrane can be used, or alternatively, a multi-layer membrane of at least two layers of these can be used; a composite multilayer membrane such as a polyethylene/polypropylene bilayer separator, a polyethylene/polypropylene/polyethylene trilayer separator, or a polypropylene/polyethylene/polypropylene trilayer separator may be used.

Hereinafter, the present invention will be demonstrated by way of some examples that are presented only for the sake of illustration, which are not to be construed as limiting the scope of the present invention. It should be noted that in the following Examples and Comparative Examples, various properties were evaluated in the following manners.

Average Fiber Diameter (μm)

From a test sample (i.e., a nonwoven fabric), was randomly selected a point, at which a micrograph was used to obtain an image using a scanning electron microscope under a 1000x magnification to measure fiber diameters of 100 fibers, so as to obtain an average value of the measured fiber diameters.

Breaking Length (kilometer)

Using an autograph available from Shimadzu Corporation, each of three portions in a test sample (i.e., a nonwoven fabric) was measured in a length direction and a width direction thereof to obtain tensile strength (N/15mm) in accordance with JIS L 1906, and the following equation was used to calculate a breaking length from an average value of the tensile strength:

$$\text{Breaking Length} = \{\text{Strength (N)} / \text{Measurement Range (mm)} / \text{Basis Weight (g/m}^2) / 9.8\} \times 1000$$

It should be noted that, here, the measurement range was 15 mm. Basis Weight (g/m$^2$)

Sample pieces (3 pieces) each having a size of 20cm (length) × 20cm (width) were taken from a test samples (i.e., nonwoven fabrics) prepared in the Examples and Comparative Examples in a width direction in a range of 1 m, in accordance with JIS L 1906, a mass of each of the sample pieces was measured using an electronic balance, followed by calculation of an average value of the masses of the three sample pieces. Then the average value was divided by a sample piece surface area of 400 cm$^2$ to calculate a mass per unit area as the basis weight of a respective one of the nonwoven fabrics.

Thickness (μm)

In accordance with JIS L 1906, a thickness of each of the sample pieces (3 pieces) prepared in the same way as samples for basis weight measurement was measured at five points per each sample piece using a BI-type, digital thickness meter with a diameter of 16 mm and a load of 20 gf/$cm^2$ (available from Toyo Seiki Seisaku-sho, Ltd.). Then an average value of the measurements at the 15 points was regarded as the thickness of a nonwoven fabric or a current collector.

Air Permeability (cc/$cm^2$/sec)

In accordance with JIS L 1096, 6.27.1 ("A" method: Frazier method), an air permeability of each of the sample pieces (3 pieces) prepared in the same way as samples for basis weight measurement was measured using an air permeability meter FX3300 (available from TEXTEST in Switzerland) under the conditions of a measurement area of 38 $cm^2$ and a measurement pressure of 125 Pa. Then an average value of the measurements obtained in the three sample pieces was regarded as the air permeability of a nonwoven fabric or a current collector.

Surface Resistance (Ω/sq)

In accordance with JIS-K-7194, a surface resistance of each of current collectors was measured using a resistance meter MULTIMETER3478A (available from Hewlett Packard Company) by means of a four-terminal method using a four-point probe.

Melting Point of Thermotropic Liquid Crystalline Polyester Fiber (°C)

Thermal behavior of a thermotropic liquid crystalline polyester fiber was observed using a differential scanning calorimeter DSC-60A (available from Shimadzu Corporation). That is, the thermotropic liquid crystalline polyester fiber sample was subjected to heating at an elevating rate of 20°C/min to be completely melted, followed by to rapid cooling of the melted sample down to 50°C at a cooling rate of 50°C/min, and to reheating at an elevating rate of 20°C/min. The point of the endothermic peak which appeared during the reheating was recorded as the melting point of the thermotropic liquid crystalline polyester fiber.

Example 1

(1) A thermotropic liquid crystal wholly aromatic polyester comprising of copolymer of p-hydroxybenzoic acid and 6-hydroxy-2-naphthoic acid and having a melting point of 300°C, and a melt viscosity of 15 Pa·s at 310 °C was extruded using twin extruder, and fed to a melt-blown nonwoven fabric production apparatus having a nozzle with 1500 holes per 1 m range with a nozzle hole size (i.e., diameter) of 0.15 mm, L/D of 30, and a nozzle hole-to-nozzle hole distance of 0.67 mm. The resultant polymer melt was discharged from the apparatus under a condition of discharging rate of 0. 10 g/min per hole, at a resin temperature of 330°C, and at a hot air temperature of 330°C with ejection of 18 $Nm^3$ per nozzle width of 1 m to obtain a nonwoven fabric with a basis weight of 15 g/$m^2$, followed by a heat treatment of the same in air at 300°C for a duration of 6 hours. Subsequently, the resulting nonwoven fabric was continuously treated by means of a pressure calendaring operation at a linear pressure of 120 kg/cm where the nonwoven fabric was passed through between a metal roll heated at 110°C and an elastic roll (available from Yuri Roll Co., Ltd.) comprising a resin and having a surface shore D hardness of 86°. Thus-obtained melt-blown nonwoven fabric had an average fiber diameter of 2.8 μm, a tensile strength of 57 N/15mm in a length direction thereof, a tensile strength of 29 N/15mm in a width direction thereof, a breaking length of 26 kilometers in the length direction, a breaking length of 13 kilometers in the width direction, a basis weight of 15 g/$m^2$ as mentioned earlier, a thickness of 23 μm, and an air permeability of 32 cc/$cm^2$/sec.

(2) A palladium catalyst was provided on a fiber surface of the melt-blown nonwoven fabric obtained in the step (1) above, and the resultant was immersed in an electroless plating copper solution containing copper sulfate and potassium sodium tartrate (or a Rochelle salt), followed by washing thereof with water, to form a copper coating on the surface of the nonwoven fabric. Subsequently, the copper-coated nonwoven fabric was immersed in an electroplating nickel solution, and subjected to electroplating to be coated with nickel, followed by washing thereof with water, and drying to obtain a conductive nonwoven fabric with a copper coating and a nickel coating on the copper coating in layer. Table 5 shows the measurement results of the air permeability, the thickness, and the surface resistance of this conductive nonwoven fabric.

Example 2

A melt-blown nonwoven fabric with a basis weight of 9 g/$m^2$ was produced by using the same process as that in Example 1. The obtained melt-blown nonwoven fabric had an average fiber diameter of 2.8 μm, a tensile strength of 33 N/15mm in a length direction thereof, a tensile stress of 16 N/15mm in a width direction thereof, a breaking length of 25 kilometers in the length direction, a breaking length of 12 kilometers in the width direction, a thickness of 15 μm, and an air permeability of 68 cc/$cm^2$/sec. A conductive nonwoven fabric was prepared using the obtained melt-blown nonwoven fabric in the same manner as that in Example 1. Table 5 shows the measurement results of the air permeability, the thickness, and the surface resistance of this conductive nonwoven fabric.

Example 3

A melt-blown nonwoven fabric with a basis weight of 4 g/$m^2$ was produced by using the same process as that in Example 1. The obtained melt-blown nonwoven fabric had an average fiber diameter of 2.8 μm, a tensile strength of 11 N/15mm in a length direction thereof, a tensile stress of 5 N/15mm in a width direction thereof, a breaking length of 19 kilometers in the length direction, a breaking length of 9 kilometers in the width direction, a thickness of 13 μm, and an air permeability of 204 cc/$cm^2$/sec. A conductive nonwoven fabric was prepared using the obtained melt-blown nonwoven fabric in the same manner as that in Example 1. Table 5 shows the measurement results of the air permeability, the thickness, and the surface resistance of this conductive nonwoven fabric.

Example 4

Except that a polyethylene terephthalate (PET) melt-blown nonwoven fabric (with a basis weight of 9.1 g/$m^2$, a thickness of 12 μm, a melting point of 255°C, an air permeability of 12 cc/$cm^2$/sec, and an average fiber diameter of 3.3 μm) was employed as the nonwoven fabric, a conductive nonwoven fabric was prepared by using the same process as that in Example 1. Table 5 shows the measurement results of the air permeability, the thickness, and the surface resistance of this conductive nonwoven fabric.

Comparative Example 1

(1) A thermotropic liquid crystal wholly aromatic polyester comprising a copolymer of p-hydroxy benzoic acid and 6-hydroxy-2-naphthoic acid and having a melting point of 300°C and a melt viscosity of 15 Pa s at 310°C was extruded using a twin-screw extruder and discharged from a T die so as to provide a film with a thickness of 11 μm.
(2) Thus-obtained film, was formed a conductive coating by using the same process as that in Example 1. Table 5 shows the measurement results of the air permeability, the thickness, and the surface resistance of this resulting conductive film.

Comparative Example 2

Except that a polyethylene terephthalate (PET) nonwoven fabric (with a basis weight of 80 g/$m^2$, a thickness of 48 μm, a melting point of 255°C, an air permeability of 0.09 cc/$cm^2$/sec, and an average fiber diameter of 3.3 μm) was employed as the nonwoven fabric, a conductive nonwoven fabric was prepared by using the same process as that in Example 1. Table 5 shows the measurement results of the air permeability, the thickness, and the surface resistance of this conductive nonwoven fabric.

Example 5

Binder Composition for Negative Electrode

A 10 wt% aqueous solution of a water-soluble, lithium-modified isobutene-maleic anhydride copolymer resin (with an average molecular weight of 325000, a neutralization degree of 0.5, and a ring-opening percentage of 96%) was prepared as a binder composition for a negative electrode. The 10 wt% aqueous solution of the resin was mixed with diethanol amine (available from Wako Pure Chemical Industries, Ltd.) as a monoamine and a polyethylene imine PEI with an average molecular weight of 10000 (available from Wako Pure Chemical Industries, Ltd.) as a polyamine in a weight ratio of 100: 2.98: 3.17, so as to prepare an aqueous binder solution containing the binder composition.

Preparation of Slurry for Negative Electrode

Into a dedicated container, were added 100 parts by weight of a natural graphite DMGS (available from Shanghai Shanshan Tech Co., Ltd.) as a negative electrode active material, the 10 wt% aqueous solution of a binder composition for a negative electrode at a proportion of 3.125 parts by weight as the solid content of a polyvinyl alcohol (available from Kuraray Co., Ltd.), and a conductive agent (or a conductive additive) at a proportion of 1.041 parts by weight as the solid content of carbon black "Super-P" (available from Timcal), and then kneaded using a planetary mixer ARE-250 (available from Shinki Corporation). Further, 94.3 parts by weight of water for adjustment of the slurry viscosity were added thereto during said kneading, and the resultant was further kneaded so as to prepare a slurry for electrode coating with the composition ratio of the active material, the conductive agent, and the binder as the solid content in the slurry of 100: 1.041: 3.125.

Preparation of Negative Electrode for Battery

Thus-obtained slurry was coated on the current collector using a bar coater T101 (available from Matsuo Sangyo Co., Ltd.), followed by subjected to primary drying using a hot-air dryer (available from Yamato Scientific Co., Ltd.) at 80°C for a duration of 30 minutes. The resultant was subjected to rolling treatment using a roll press (available from Hohsen Corp.). The resultant was punched into a shape of battery electrode ($\phi$ = 14 mm), and then subjected to secondary drying under the condition of a reduced pressure at 120°C for a duration of 3 hours so as to prepare an electrode for a coin cell. As for three sample pieces obtained in the same way as the above electrode for a coin cell, in accordance with JIS L 1906, a thickness of each of the sample pieces (3 pieces) was measured at three points per each sample piece using a B1-type, digital thickness meter with a diameter of 16 mm and a load of 20 gf/$cm^2$ (available from Toyo Seiki Seisaku-sho, Ltd. B1 type). Then an average value of the measurements at the 9 points was regarded as the thickness of the electrode.

Preparation of Battery

A 2032 type coin cell was produced by using the resulting battery negative electrode transferred into a glove box (available from Miwa Mfg Co., Ltd.) at an argon gas atmosphere; a lithium metal foil (thickness = 0.2 mm and $\phi$ = 16 mm) used as a positive electrode; a polypropylene separator membrane Celgard#2400 (available from Polypore International, Inc.) used as a separator; and a mixed solvent solution of lithium hexafluorophosphate ($LiPF_6$) obtained by adding vinylene carbonate (VC) to ethylene carbonate (EC) and ethyl methyl carbonate (EMC) (1M-$LiPF_6$; EC/EMC = 3/7 vol%; VC 2 wt%) which was used as an electrolyte and poured thereinto.

Recharging and Discharging Characteristics Test

A commercial recharging and discharging tester TOSCAT3100 (available from Toyo System Co., Ltd.) was used to conduct a recharging and discharging test on the produced coin cell. While the coin cell was being placed in a thermostatic chamber at 25°C, constant current charging was carried out on the active material mass at 0.1 C (i.e., about 0.5 mA/$cm^2$) until it reached 0 V relative to the lithium potential, followed by the performing of additional constant voltage charging at 0 V relative to the lithium potential until it reached the current of 0.02 mA. The capacity at this point was defined as a charging capacity (mAh/g). Subsequently, constant current discharging was carried out at 0.1 C (i.e., about 0.5 mA/$cm^2$) until it reached 1.5 V relative to the lithium potential, and the capacity at this point was defined as a discharging capacity (mAh/g).

Impedance

An electrochemical measurement device "1255WB-type, advanced electrochemical measurement system" (available from Solartron) was used to apply a 10-mV amplitude centered at 0 V to the coin cell, which was produced in the above-mentioned way, at 25°C to measure a constant voltage AC impedance thereof at the frequency of 10 mHz to 1 MHz, and the real resistance at the frequency of 1 kHz was determined as an impedance resistance.

Example 6

Except that the current collector of Example 2 was used in place of the current collector of Example 1, Example 6 was followed in the same manner as Example 5.

Example 7

Except that the current collector of Example 3 was used in place of the current collector of Example 1, Example 7 was followed in the same manner as Example 5.

Example 8

Except that the current collector of Example 4 was used in place of the current collector of Example 1, Example 8 was followed in the same manner as Example 5.

Comparative Example 3

Except that the current collector of Comparative Example 1 was used in place of the current collector of Example 1, Comparative Example 3 was followed in the same manner as Example 5.

Comparative Example 4

Except that the current collector of Comparative Example 2 was used in place of the current collector of Example 1, Comparative Example 5 was followed in the same manner as Example 5.

Tables 5 and 6 show the results of assessment of the physical properties of current collectors in Examples and Comparative Examples, and the properties of electrodes and batteries, respectively. The batteries (Examples 5 to 8) prepared by using the current collectors of Examples 1 to 4 had low resistances and high discharging capacities, as well as high efficiencies of recharging and discharging. On the other hand, the batteries (Comparative Examples 3 and 4) prepared by using the current collectors of Comparative Examples 1 and 2 had high resistances and low discharging capacities, as well as deteriorated efficiencies of recharging and discharging. In particular, Comparative Examples 3 and 4 had particularly high impedance resistances even though they used the same slurry as those in Examples 5 to 8.

In addition, the use of the current collectors of Examples 1 to 4 allowed the electrodes to achieve smaller thicknesses as a whole, thanks to the porous structures of the current collectors which helped the penetration of a portion of the slurry into the interiors of the current collector. Furthermore, assuming that the thickness of an active material layer equals to the entire thickness of an electrode minus the thickness of a current collector, Examples 5 to 8 achieved lower resistances and higher discharging capacities as well as higher efficiencies of recharging and discharging, even though the thickness of the active material layer in each of them was smaller than either one of those of Comparative Examples 3 and 4.

Table 5

| | Physical Properties of Current Collector | | |
|---|---|---|---|
| | Air Permeability | Thickness | Surface Resistance |
| | $cc/cm^2/sec$ | μm | Ω/sq |
| Example 1 | 19 | 25 | 0.028 |
| Example 2 | 49 | 17 | 0.031 |
| Example 3 | 204 | 15 | 0.033 |
| Example 4 | 12 | 16 | 0.027 |
| Comp. Example 1 | 0 | 15 | 0.040 |
| Comp. Example 2 | 0.09 | 52 | 0.039 |

Table 6

| Electrode | Current Collector | Electrode Thickness | Electrode Thickness Minus Current Collector Thickness | Charging Capacity | Discharging Capacity | Recharging and Discharging Efficiency | Impedance Resistance |
|---|---|---|---|---|---|---|---|
| | | μm | μm | mAh/g | mAh/g | % | Ω |
| Example 5 | Example 1 | 65 | 40 | 349 | 327 | 93.7 | 3.2 |
| Example 6 | Example 2 | 48 | 31 | 352 | 331 | 94.1 | 2.7 |
| Example 7 | Example 3 | 42 | 27 | 350 | 330 | 94.3 | 2.5 |
| Example 8 | Example 4 | 56 | 40 | 351 | 332 | 94.6 | 2.9 |
| Comparative Example 3 | Comparative Example 1 | 65 | 50 | 348 | 318 | 91.5 | 9.5 |
| Comparative Example 4 | Comparative Example 2 | 101 | 49 | 353 | 322 | 91.2 | 10.1 |

While the foregoing Examples presented instances where an electrode according to the present invention was used as a negative electrode of a button cell, the present invention is not limited thereto. As an alternative to the foregoing, an electrode according to the present invention can be used as a positive electrode of a button cell. Also, the non-aqueous electrolyte battery is not limited to a "button cell," but can be any battery with a different shape such as a cylinder shape.

Further, while the foregoing Examples used electrolytes in the form of a liquid, they are not limited thereto; electrolytes in a different form such as a gelled form can also be used.

INDUSTRIAL APPLICABILITY

An electrode according to the present invention can achieve a reduced thickness, achieve a sufficiently low electrode resistance, and achieve advantageous recharging and discharging characteristics. Thus, such an electrode can be used in a non-aqueous electrolyte battery that is compact and lightweight for application in various fields according to its purpose, such as a mobile phone, a personal digital assistant such as a smart watch, a laptop personal computer, and a wearable device.

Although the present invention has been fully described in connection with the preferred embodiments thereof, those skilled in the art will readily conceive numerous changes and modifications within the framework of obviousness of the present invention. Accordingly, such changes and modifications are, unless they depart from the scope of the present invention as delivered from the claims annexed hereto, to be construed as included therein.

## Claims

1. A current collector comprising a conductive body having a three-dimensional porous structure, the current collector having an air permeability of 0.1 to 600 cc/cm$^2$/sec and a thickness of less than 100 $\mu$m.

2. The electrode according to claim 1, wherein the conductive body comprises a non-conductive structure with a metal coating.

3. The current collector according to claim 2, wherein the non-conductive structure comprises a nonwoven fabric having an average fiber diameter of 5 $\mu$m or smaller.

4. The current collector according to any one of claims 1 to 3, wherein the conductive body comprises a fibrous structure having a basis weight of 1.0 to 50 g/m$^2$.

5. The current collector according to any one of claims 1 to 4, wherein the conductive body comprises a nonwoven fabric structure.

6. The current collector according to any one of claims 1 to 5, wherein the conductive body comprises a melt-blown nonwoven fabric of a thermotropic liquid crystal wholly aromatic polyester and a metal coating formed on the nonwoven fabric.

7. The current collector according to claim 2 or 6, or any one of claims 3 to 5 where depending from claim 2, wherein the metal coating comprises at least one metal selected from the group consisting of copper, nickel, gold, silver, and aluminum.

8. The current collector according to any one of claims 1 to 7, wherein the conductive body comprises a fibrous structure having a breaking length of 10 kilometers or more in a length direction thereof and a breaking length of 6 kilometers or more in a width direction thereof.

9. An electrode comprising a current collector according to any one of claims 1 to 8 and an electrode material layer disposed on at least one surface of said current collector.

10. A non-aqueous electrolyte battery comprising an electrode according to claim 9.

**INTERNATIONAL SEARCH REPORT**

International application No. **PCT/JP2021/042798**

**A. CLASSIFICATION OF SUBJECT MATTER**

***H01M 4/80***(2006.01)i; ***H01M 4/66***(2006.01)i
FI: H01M4/80 C; H01M4/66 A

According to International Patent Classification (IPC) or to both national classification and IPC

**B. FIELDS SEARCHED**

Minimum documentation searched (classification system followed by classification symbols)

H01M4/80; H01M4/66

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2010/103927 A1 (KURARAY CO., LTD.) 16 September 2010 (2010-09-16) | 1-10 |
| A | JP 2012-109224 A (UBE IND., LTD.) 07 June 2012 (2012-06-07) | 1-10 |
| A | JP 2004-193062 A (JAPAN VILENE CO., LTD.) 08 July 2004 (2004-07-08) | 1-10 |
| A | CN 109390590 A (MINGTIAN TECH SHENZHEN CO., LTD.) 26 February 2019 (2019-02-26) | 1-10 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 January 2022** | **08 February 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2021/042798**

| Patent document cited in search report | Publication date (day/month/year) | Patent family member(s) | Publication date (day/month/year) |
|---|---|---|---|
| WO 2010/103927 A1 | 16 September 2010 | US 2011/0318642 A1<br>EP 2408046 A1<br>KR 10-2011-0132571 A | |
| JP 2012-109224 A | 07 June 2012 | (Family: none) | |
| JP 2004-193062 A | 08 July 2004 | (Family: none) | |
| CN 109390590 A | 26 February 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020199271 A
- JP 2004071305 A
- JP 2003282066 A
- JP 2012195182 A